# FASCICULE DE BREVET EUROPEEN

(11) **EP 0 524 069 B1**
(45) Date de publication et mention de la délivrance du brevet: **23.08.1995**
(21) Numéro de dépôt: 92401994.6
(22) Date de dépôt: 09.07.1992
(51) Int. Cl.: B60S 1/32

(54) **Balai d'essuie-glace du type comportant une lame déflectrice aérodynamique fixée au moyen d'une attache amovible**
Auf einem Wischblatt montierter abnehmbarer Windableiter
Aerodynamic air deflector removably mounted on a windscreen wiper

(30) Priorité: 16.07.1991 FR 9108976
(43) Date de publication de la demande: 20.01.1993
(73) Titulaire: PAUL JOURNEE S.A., F-92707 Colombes Cédex (FR)
(72) Inventeur: Journée, Maurice, F-60240 Reilly (FR); Duda, Jean, F-60175 Villeneuve-Les-Sablons (FR)
(74) Mandataire: Lemaire, Marc

(56) Documents cités:
- EP-A- 0 403 385
- DE-A- 1 949 948
- DE-A- 3 740 639
- US-A- 4 989 290

## Description

La présente invention concerne un balai d'essuie-glace du type comportant une structure de support de la lame d'essuyage et au moins une lame déflectrice aérodynamique.

L'invention concerne plus particulièrement un balai dans lequel la lame déflectrice s'étend longitudinalement en regard d'au moins une portion d'une des faces latérales du balai d'essuie-glace et qui est reliée au balai par des moyens de fixation.

La présente invention vise particulièrement à proposer des moyens de fixation de la lame déflectrice qui soient de conception particulièrement simple et qui se présentent sous la forme d'éléments qui puissent être réalisés indépendamment du balai d'essuie-glace et de la lame déflectrice.

L'invention vise notamment à proposer des moyens de fixation qui puissent être montés de manière très facile sur une structure de support de la lame d'essuyage de conception classique sans nécessiter de modification particulière de cette structure et qui permettent de réaliser la lame déflectrice notamment sous la forme d'un élément extrudé de profil peu complexe.

Dans ce but l'invention propose un balai d'essuie-glace du type mentionné précédemment les moyens de fixation qui permettent de relier la lame déflectrice au balai d'essuie-glace comportant au moins une attache dont une première portion est fixée de manière amovible sur un des composants de la structure de support de la lame d'essuyage conformément aux enseignements du document EP-A-0403 385, caractérisé en ce que ladite attache comporte une seconde portion présentant une forme de boucle qui entoure la lame déflectrice dans la zone de fixation de cette dernière.

Selon des modes de réalisation de l'invention :
- la première portion de fixation présente en section transversale sensiblement la forme d'un pont qui chevauche une portion de forme complémentaire du composant de la structure de support et dont les extrémités libres comportent chacune un ergot qui s'étend transversalement vers l'intérieur pour coopérer avec un bord en vis-à-vis du composant ;
- la portion de fixation est emboîtée élastiquement sur le composant de la structure de support ;
- la portion de fixation en forme de pont présente une section sensiblement trapézoïdale ;
- la seconde portion en forme de boucle de l'attache comporte une branche fixe d'appui sur laquelle prend appui la face intérieure de la lame déflectrice et une branche articulée de fermeture qui s'étend devant la face extérieure de la lame déflectrice ;
- la branche articulée de fermeture se prolonge par une branche de verrouillage dont l'extrémité libre est accrochée sur une portion de l'attache ;
- l'extrémité libre de la branche d'accrochage est réalisée en forme de crochet et coopère avec un ergot correspondant de l'attache ;
- la branche fixe d'appui comporte un pion d'immobilisation longitudinale qui s'étend transversalement vers l'extérieur et qui est reçu dans un trou correspondant de la lame déflectrice ;
- l'attache est réalisée en une seule pièce en matière plastique moulée ; et
- les moyens de fixation de la lame déflectrice comportent au moins deux attaches de fixation espacées longitudinalement le long du balai d'essuie-glace.

D'autres caractéristiques et avantages de l'invention apparaîtront à la lecture de la description détaillée qui va suivre pour la compréhension de laquelle on se reportera au dessin annexé sur lequel :
- La figure 1 est une vue en section axiale d'un composant de la structure de support d'un balai d'essuie-glace équipé d'une attache de fixation réalisée conformément aux enseignements de l'invention ainsi que d'une lame déflectrice ;
- la figure 2 est une vue de détail en perspective de la structure de support du balai d'essuie-glace dans la zone de montage de l'attache de fixation de la figure 1 ; et
- la figure 3 est une vue de détail en perspective de la lame déflectrice dans sa zone de montage dans l'attache de fixation.

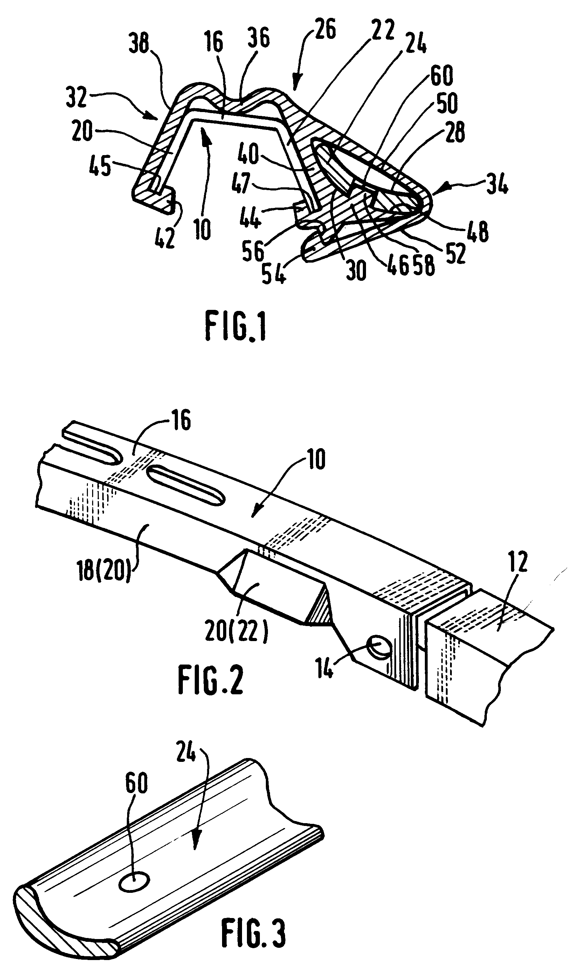

On reconnaît sur la figure 2 une portion 10 de l'étrier principal, également appelé grand pont, d'une structure destinée à supporter une lame d'essuyage (non représentée) d'un balai d'essuie-glace.

La structure de support peut comporter également par exemple au moins un étrier secondaire 12 qui est articulé en 14 à l'une des extrémités de l'étrier principal 10.

L'étrier principal 10, ainsi que le ou les étriers secondaires 12 présentent généralement en section transversale une forme en U inversé constituée par une face supérieure plane 16 et deux joues latérales 18 et 20.

Dans la zone prévue pour la fixation de l'attache d'une lame déflectrice au balai selon l'invention, les joues latérales 18 et 20 comportent des portions déformées latéralement vers l'extérieur 20, 22 de manière à conférer à l'étrier principal, dans cette zone, une section transversale en forme de pont de section trapézoïdale.

Dans la section illustrée à la figure 1, on retrouve la zone de l'étrier principal 10 en forme de section trapézoïdale avec sa face supérieure 16 et ses joues latérales inclinées 20 et 22.

Une lame déflectrice 24 est fixée sur le balai d'essuie-glace, et dans l'exemple illustré aux figures sur l'étrier principal 10 au moyen d'une attache ou agrafe de fixation et de montage 26.

D'une manière générale, la lame déflectrice 24 présente en section transversale un profil incurvé qui définit une face extérieure convexe 28 et une face intérieure concave 30.

L'attache 26 est constituée d'une première portion 32, située à gauche en considérant la figure 1, qui a pour fonction d'assurer la fixation de l'attache 26 sur l'étrier principal 10, et d'une seconde portion 34, située à droite en considérant la figure 1, qui a pour fonction d'assurer la fixation de la lame déflectrice 24.

La portion de fixation 32 présente en section transversale sensiblement la forme d'un pont de section trapézoïdale en U inversé qui est complémentaire de celle de l'étrier principal 10 dans la zone de fixation et dont le contour interne épouse le contour extérieur de l'étrier principal dans cette zone.

La portion de fixation comporte à cet effet une face supérieure 36 et deux branches ou joues latérales 38 et 40 qui s'étendent le long des joues latérales 20 et 22 de l'étrier principal 10.

Les extrémités libres inférieures, en considérant la figure 1, des branches 38 et 40 comportent chacune un ergot d'accrochage 42, 44 qui s'étend transversalement vers l'intérieur de l'étrier principal et qui est recourbé en forme de crochet pour coopérer avec le bord inférieur en vis-à-vis 45, 47 de chacune des joues latérales 20 et 22 de l'étrier principal 10.

L'attache 26 est réalisée en une seule pièce moulée en matière plastique et sa face supérieure 36 présente une forme bombée vers l'intérieur de manière à permettre la fixation de la première portion de fixation 32 sur l'étrier principal 10 par emboîtement élastique et accrochage des ergots 42 et 44.

La seconde portion 34 de l'attache 26 présente sensiblement la forme d'une boucle qui entoure la lame déflectrice 24.

En section transversale telle qu'elle est illustrée à la figure 1, la boucle 34 comporte une première branche intérieure ou branche d'appui 46 qui délimite une face concave d'appui 48 sur laquelle prend appui la face intérieure convexe de la lame déflectrice 24.

La boucle 34 comporte également une branche extérieure de fermeture 50 qui s'étend en regard de la face extérieure convexe 28 de la lame déflectrice 24 pour entourer cette dernière.

La branche de fermeture 50 est articulée au voisinage de son extrémité supérieure, en considérant la figure 1, afin de permettre son pivotement et une ouverture de la boucle 34 pour y introduire aisément la lame déflectrice 24.

La branche de fermeture 50 se prolonge par une branche de verrouillage 52 qui s'étend en-dessous de la branche d'appui 46 et dont l'extrémité libre 54 est réalisée en forme de crochet et coopère avec un ergot 56 formé sur la face inférieure de la branche d'appui 46.

En position ouverte, on introduit transversalement la lame déflectrice 24 dans la portion en forme de boucle 34 puis on réalise la fermeture de cette dernière en venant procéder à l'accrochage du crochet 54 sur l'ergot 56 qui est maintenu accroché sur ce dernier du fait de l'élasticité des branches 50 et 52.

Afin d'immobiliser longitudinalement la lame déflectrice 24 par rapport à l'attache 26, la face d'appui 54 de la branche intérieure d'appui 46 comporte un pion 58 d'immobilisation longitudinal qui s'étend transversalement vers l'extérieur depuis la face d'appui 54 et qui est reçu dans un orifice de forme complémentaire 60 formé dans la lame déflectrice 24 dans la zone de cette dernière prévue pour sa fixation au moyen de l'attache 26.

De la même manière, selon une variante non représentée, il serait possible de prévoir un pion d'immobilisation longitudinal sur la face supérieure 36 de la première portion de fixation 32 de l'attache 26 qui serait reçu dans un orifice correspondant formé dans la face supérieure 16 de l'étrier principal 10 de manière à immobiliser longitudinalement l'attache 26 par rapport à cet étrier principal.

## Revendications

1. Balai d'essuie-glace du type comportant une structure (10, 12) de support de la lame d'essuyage et au moins une lame déflectrice aérodynamique (24) qui s'étend longitudinalement en regard d'au moins une portion d'une des faces latérales du balai d'essuie-glace et qui est reliée au balai par des moyens de fixation, ces moyens de fixation comportant au moins une attache (26) dont une première portion (32) est fixée de manière amovible sur un des composants (10) de la structure de support, caractérisé en ce que ladite attache (26) comporte une seconde portion (34) présentant une forme de boucle qui entoure la lame déflectrice (24) dans la zone de fixation de cette dernière.

2. Balai d'essuie-glace selon la revendication 1, caractérisé en ce que la première portion de fixation (32) présente en section transversale sensiblement la forme d'un pont qui chevauche une portion de forme complémentaire dudit composant (10) et dont les extrémités comportent chacune un ergot (42, 44) qui s'étend transversalement vers l'intérieur pour coopérer avec un bord en vis-à-vis (45, 47) du composant (10).

3. Balai d'essuie-glace selon la revendication 2, caractérisé en ce que la portion de fixation (32) est emboîtée élastiquement sur ledit composant (10) de la structure de support de la lame d'essuyage.

4. Balai d'essuie-glace selon la revendication 3, caractérisé en ce que la portion de fixation en forme de pont présente une section sensiblement trapézoïdale.

5. Balai d'essuie-glace selon l'une quelconque des revendications 1 à 4, caractérisé en ce que la seconde portion en forme de boucle (34) comporte une branche fixe d'appui (46) sur laquelle prend appui la face intérieure (30) de la lame déflectrice (24) et une branche articulée de fermeture (50) qui s'étend devant la face extérieure (28) de la lame déflectrice (24).

6. Balai d'essuie-glace selon la revendication 5, caractérisé en ce que la branche articulée de fermeture (50) se prolonge par une branche de verrouillage (52) dont l'extrémité libre (54) est accrochée sur une portion (56) de l'attache (26).

7. Balai d'essuie-glace selon la revendication 6, caractérisé en ce que l'extrémité libre de la branche d'accrochage (52) est réalisée en forme de crochet (54) et coopère avec un ergot correspondant (56) de l'attache (26).

8. Balai d'essuie-glace selon l'une quelconque des revendications 5 à 7, caractérisé en ce que la branche fixe d'appui (46) comporte un pion (58) d'immobilisation longitudinale qui s'étend transversalement vers l'extérieur et qui est reçu dans un trou correspondant (60) de la lame déflectrice (24).

9. Balai d'essuie-glace selon l'une quelconque des revendications précédentes, caractérisé en ce que l'attache (26) est réalisée en une seule pièce en matière plastique moulée.

10. Balai d'essuie-glace selon l'une quelconque des revendications précédentes, caractérisé en ce que les moyens de fixation comportent au moins deux attaches de fixation (26) espacées longitudinalement le long du balai d'essuie-glace.

## Claims

1. A screen wiper blade of the type comprising a structure (10, 12) for supporting the wiping strip, together with at least one aerodynamic deflector (24) which extends longitudinally in facing relationship with at least a portion of one of the lateral faces of the screen wiper blade, and which is joined to the blade by fastening means, the said fastening means comprising at least one strap member (26), a first portion (32) of which is fastened removably on one of the components (10) of the support structure, characterised in that the said strap member (26) has a second portion (34) in the form of a loop which surrounds the deflector strip (24) in the fastening zone of the latter.

2. A screen wiper blade according to Claim 1, characterised in that the first fastening portion (32) has a transverse cross section substantially in the form of a bridge which straddles a portion of the said component (10) having a complementary shape, with each of the end portions of the bridge comprising a lug (42, 44) which extends transversely inwardly for cooperation with an edge (45, 47) of the component (10) in facing relationship therewith.

3. A screen wiper blade according to Claim 2, characterised in that the fastening portion (32) is fitted resiliently over the said component (10) of the support structure for the wiping strip.

4. A screen wiper blade according to Claim 3, characterised in that the bridge-shaped fastening portion has a substantially trapezoidal cross section.

5. A screen wiper blade according to any one of Claims 1 to 4, characterised in that the loop-shaped second portion (34) has a fixed engagement branch (46) on which are engaged the internal face (30) of the deflector strip (24) and an articulated closure branch (50) which extends in front of the external face (20) of the deflector strip (24).

6. A screen wiper blade according to Claim 5, characterised in that the articulated closure branch (50) is extended by a locking branch (52), the free end (54) of which is hooked on to a portion (56) of the strap member (26).

7. A screen wiper blade according to Claim 6, characterised in that the free end of the hooked branch (52) is made in the form of a hook (54), and cooperates with a corresponding projecting element (56) of the strap member (26).

8. A screen wiper blade according to any one of Claims 5 to 7, characterised in that the fixed engagement branch (46) comprises a boss (58) for preventing longitudinal movement, which extends transversely outwardly and which is received in a corresponding hole (60) of the deflector strip (24).

9. A screen wiper blade according to any one of the preceding Claims, characterised in that the strap member (26) is formed in one piece in moulded plastics material.

10. A screen wiper blade according to any one of the preceding Claims, characterised in that the fastening means comprise at least two fastening strap members (26) spaced apart longitudinally along the screen wiper blade.

## Patentansprüche

1. Wischblatt in der Ausführung mit einer Tragstruktur (10, 12) für die Wischerleiste und mindestens einem aerodynamischen Windableiter (24), der sich in Längsrichtung gegenüber wenigstens einem Teilstück einer der Seitenflächen des Wischblatts erstreckt und der mit dem Wischblatt durch Befestigungsmittel verbunden ist, wobei diese Befestigungsmittel mindestens eine Halterung (26) umfassen, die mit einem ersten Teilstück (32) abnehmbar an einem der Bestandteile (10) der Tragstruktur befestigt ist , **dadurch gekennzeichnet,** daß die genannte Halterung (26) ein zweites Teilstück (34) umfaßt, das die Form einer Schlaufe aufweist, welche den Windableiter (24) in seinem Befestigungsbereich umgibt.

2. Wischblatt nach Anspruch 1 , **dadurch gekennzeichnet,** daß das erste Befestigungsteilstück (32) im Querschnitt in etwa die Form einer Brücke aufweist, die ein entsprechend geformtes Teilstück des genannten Bestandteils (10) übergreift und deren freie Enden jeweils eine Nase (42, 44) umfassen, die sich quer nach innen erstreckt, um mit einer gegenüberliegenden Kante (45, 47) des Bestandteils (10) zusammenzuwirken.

3. Wischblatt nach Anspruch 2 , **dadurch gekennzeichnet,** daß das Befestigungsteilstück (32) elastisch an dem genannten Bestandteil (10) der Tragstruktur der Wischerleiste eingepaßt ist.

4. Wischblatt nach Anspruch 3 , **dadurch gekennzeichnet,** daß das brückenförmige Befestigungsteilstück einen in etwa trapezförmigen Querschnitt aufweist.

5. Wischblatt nach einem der Ansprüche 1 bis 4 , **dadurch gekennzeichnet,** daß das zweite schlaufenförmige Teilstück (34) einen festen Auflageabschnitt (46) umfaßt, auf dem die Innenfläche (30) des Windableiters (24) zur Auflage kommt, und einen angelenkten Verschlußabschnitt (50), der sich vor der Außenfläche (28) des Windableiters (24) erstreckt.

6. Wischblatt nach Anspruch 5 , **dadurch gekennzeichnet,** daß der angelenkte Verschlußabschnitt (50) durch einen Einrastabschnitt (52) verlängert wird, dessen freies Ende (54) an einem Teilstück (56) der Halterung (26) eingehakt ist.

7. Wischblatt nach Anspruch 6 , **dadurch gekennzeichnet,** daß das freie Ende des Einrastabschnitts (52) in Form eines Hakens (54) ausgeführt ist und mit einer entsprechenden Nase (56) der Halterung (26) zusammenwirkt.

8. Wischblatt nach einem der Ansprüche 5 bis 7 , **dadurch gekennzeichnet,** daß der feste Auflageabschnitt (46) einen Längssicherungsstift (58) umfaßt, der sich quer nach außen erstreckt und der in einem entsprechenden Loch (60) des Windableiters (24) aufgenommen ist.

9. Wischblatt nach einem der vorangehenden Ansprüche, **dadurch gekennzeichnet,** daß die Halterung (26) einstückig als Kunststoff-Formteil ausgeführt ist.

10. Wischblatt nach einem der vorangehenden Ansprüche, **dadurch gekennzeichnet,** daß die Befestigungsmittel mindestens zwei Befestigungshalterungen (26) umfassen, die in Längsrichtung mit Abstand entlang dem Wischblatt angeordnet sind.
